# EUROPÄISCHE PATENTSCHRIFT

(11) **EP 1 591 317 B1**
(45) Veröffentlichungstag und Bekanntmachung des Hinweises auf die Patenterteilung: **06.01.2010**
(21) Anmeldenummer: 05007459.0
(22) Anmeldetag: 05.04.2005
(51) Int. Cl.: B60R 7/04, E06B 9/11

(54) **Staufachabdeckung**
Cover for storage compartment
Couverture d'espace de rangement

(30) Priorität: 27.04.2004 DE 102004020553
(43) Veröffentlichungstag der Anmeldung: 02.11.2005
(73) Patentinhaber: Lisa Dräxlmaier GmbH, 84137 Vilsbiburg (DE)
(72) Erfinder: Müller, Ralf, 86633 Neuburg/Donau (DE); Janzer, Peter, 76646 Bruchsal (DE)
(74) Vertreter: HOFFMANN EITLE

(56) Entgegenhaltungen:
- DE-U1- 9 403 833
- GB-A- 2 366 554
- US-A- 5 332 021

## Beschreibung

### 1. Gebiet der Erfindung

Die vorliegende Erfindung bezieht sich auf ein Innenausstattungsteil eines Fahrzeugs mit einer Öffnung und einer Abdeckung, die im Allgemeinen auch als Staufachabdeckung bezeichnet werden kann. Solche Staufachabdeckungen umfassen in der Regel ein zum Öffnen oder Schließen der Abdeckung in Führungen an gegenüberliegenden Seiten der Öffnungen geführtes Rollo. Die Führungen derartiger Rollos werden im Allgemeinen auch als Kulissenführungen bezeichnet. Unter einem Rollo im hiesigen Sinne ist ein Element zu verstehen, das zum Öffnen bzw. Schließen der Öffnung in einem Innenausstattungsteil eines Kraftfahrzeugs bzw. einem entsprechenden Stauraum in der Kulissenführung verschoben wird und ein Hauptelement einer Staufachabdeckung bildet.

### 2. Stand der Technik

Staufachabdeckungen der oben genannten Art werden in der Regel vollständig manuell über eine Handhabe betätigt. Ferner erfordern sie im Allgemeinen Verriegelungselemente, um das Rollo in einem geöffneten bzw. geschlossenen Zustand zu halten. Im Stand der Technik sind diese Elemente in der Regel als federnd gestaltete Eingriffselemente konstruiert, die entweder am Rollo selbst oder an einem die Öffnung des Innenausstattungsteils umgebenden Gehäuse angeformt sind. Diese Eingriffselemente können z. B. in der Form von Bauteils, d.h. des Rollos, hinterschnittiges, federndes Eingriffselement angeformt. Dieses wird beim Verlassen der Ausgangslage, d.h. zum Beispiel beim Öffnen aus der geschlossenen Lage im elastischen Bereich ausgelenkt. An gewünschten Rastpunkten, wie z. B. der vollständig geöffneten oder auch nur teilweise geöffneten Position befindet sich in der zweiten Komponente, d.h. z. B. dem die Öffnung umgebenden Gehäuse, eine ebenfalls in Bewegurigsrichtung der ersten Komponente hinterschnittige Gegenkontur. Diese ermöglicht ein Entspannen des vorgespannten Eingriffselements und somit ein Einrasten des Eingriffselements in den Hinterschnitt.

Ein Fernsehschrank mit einer Öffnung und einer Abdeckung zum Verschließen der Öffnung und damit kein Innenausstattungsteil für ein Fahrzeug, jedoch mit den Merkmalen des Oberbegriffs aus Patentanspruch 1 ist aus der US 5,332,021 A bekannt.

### 3. Zusammenfassung der Erfindung

Das der vorliegenden Erfindung zugrunde liegende technische Problem beruht darin, ein Innenausstattungsteil umfassend eine Staufachabdeckung mit einem Rollo bereitzustellen, bei dem die Schließ- bzw. Öffnungsbewegung des Rollos zumindest in einem Teilbereich unterstützt oder selbsttätig bzw. automatisch ausgeführt wird.

Dieses technische Problem wird durch ein Innenausstattungsteil mit den Merkmalen des Patentanspruchs 1 gelöst.

So weist die Abdeckung für eine Öffnung in einem Innenausstattungsteil eines Fahrzeugs der vorliegenden Erfindung ein Trägerrollo auf, das in Führungen an gegenüberliegenden Seiten der Öffnung geführt ist, so dass eine Öffnungs- und Schließbewegung des Trägerrollos in entgegengesetzten Richtungen ermöglicht wird. Erfindungsgemäß ist in wenigstens einem Teilbereich des Trägerrollos eine elastisch verformbare, federnde Schicht mit dem Trägerrollo verbunden vorgesehen. Die Verbindung der federnden Schicht mit dem Trägerrollo kann auf verschiedenste Art und Weise erfolgen und die vorliegende Erfindung ist nicht auf die Art der Verbindung begrenzt. Als Beispiel ist die Verklebung und das gemeinsame Ausformen von Trägerrollo und federnder Schicht zu nennen. Aber auch andere dem Fachmann bekannte Techniken sind denkbar. Die Führungen der erfindungsgemäßen Abdeckungen sind derart ausgestaltet, d.h. sie führen das Trägerrollo derart, dass bei einer Verformung des Trägerrollos wenigstens in dem Teilbereich der federnden Schicht beim Schließen oder Öffnen des Trägerrollos durch die Federkraft der verformten federnden Schicht eine Schub- oder Zugkraft in einer Verschlussrichtung oder einer Öffnungsrichtung des Trägerrollos auf das Trägerrollo wirkt.

Somit liegt der Erfindung der Gedanke zugrunde, ein Trägerrollo, das in der geschlossenen Position eine im Wesentlichen ebene, flache Form annimmt und beim Öffnen über eine Kulissenführung verformt (entlang der Führung z. B. gebogen) wird, zumindest in einem Teilbereich mit einer elastisch verformbaren, federnden Schicht zu versehen. Bei einer Verformung des Trägerrollos in dem Teilbereich, in dem die federnde Schicht mit dem Trägerrollo verbunden ist, wird folglich auch die federnde Schicht verformt. Diese verformte, federnde Schicht hat die Neigung, wieder in ihre Ursprungslage zurückzukehren, die durch die Verbindung mit dem Trägerrollo auch auf dieses übergeht. Somit überträgt die federnde Schicht eine Federkraft auf das Trägerrollo. Durch die erfindungsgemäße Ausgestaltung der Kulissenführungen bzw. Führungen kann diese Federkraft teilweise in eine Schub- bzw. Zugkraft umgewandelt werden, die wiederum auf das Trägerrollo wirkt, um so das Schließen oder Öffnen des Trägerrollos selbsttätig auszuführen oder sie, je nach Ausgestaltung, lediglich zu unterstützen.

Vorteilhafte Ausführungsformen der Erfindung sind in den begleitenden abhängigen Patentansprüchen definiert.

So weist die erfindungsgemäße Abdeckung vorteilhafter Weise eine federnde Schicht auf, die im Wesentlichen in dem gesamten Bereich des Trägerrollos vorgesehen ist und vollflächig damit verbunden ist. Dadurch wird ermöglicht, dass bei Verformung des Trägerrollos gleichzeitig in jedem Bereich des Trägerrollos auch eine Verformung der federnden Schicht und die damit verbundene Kraftübertragung auf das Trägerollo erfolgt.

Gemäß einer bevorzugten Ausführungsform ist die federnde Schicht auf der Seite des Trägerrollos vorgesehen, die im geschlossenen Zustand des Trägerrollos der Öffnung abgewandt ist. Mit der der Öffnung abgewandten Seite des Trägerrollos im geschlossenen Zustand ist diese Seite des Trägerrollos gemeint, die beispielsweise in einem Kraftfahrzeug der Fahrgastzelle zugewandt ist. Dies hat den Vorteil, dass die federnde Schicht nicht nur dem Zweck der Unterstützung der Öffnungs- bzw. Schließbewegung des Trägerrollos dient, sondern zusätzlich als Design bzw. Dekorfläche ausgestaltbar ist bzw. dient.

Vorteilhafter Weise bildet die auf der im geschlossenen Zustand des Trägerrollos der Öffnung abgewandten Seite auf dem Trägerrollo vollflächig aufgebrachte federnde Schicht eine geschlossene Dekorfläche. D.h. es sind keine Einkerbungen und ähnliches zu erkennen, wie sie bei herkömmlichen "Lamellenrollos" sichtbar sind. Dadurch kann das Erscheinungsbild der erfindungsgemäßen Abdeckung weiter verbessert werden und im geschlossenen Zustand weist die Abdeckung eine glatte, ebene, geschlossene Dekorfläche auf, die im Vergleich zu herkömmlichen Rollos mit Lamellenstruktur vorteilhaft ist.

Gemäß einer weiteren Ausführungsform der vorliegenden Erfindung ist die federnde Schicht in das Trägerrollo integriert, d.h. das Trägerrollo könnte beispielsweise in einem Gießverfahren hergestellt werden, wobei die federnde Schicht möglicherweise bereits vor dem Einbringen des Trägerrollomaterials in dem Formhohlraum platziert wird. In diesem Fall könnte eine herkömmliche Rollogestaltung verwendet werden, bei der die federnde Schicht von außen unsichtbar bleibt und von dem Trägerrollo umgeben ist.

Alternativ könnte die federnde Schicht gemäß einer anderen Ausführungsform der vorliegenden Erfindung auch auf der Seite des Trägerrollos vorgesehen sein, die im geschlossenen Zustand des Trägerrollos der Öffnung zugewandt ist. Beim Beispiel eines Kraftfahrzeugs auf der der Fahrgastzelle abgewandten Seite. Dies führt ebenfalls dazu, dass die federnde Schicht von außen unsichtbar bleibt und eine herkömmliche Rollogestaltung genutzt werden kann.

Vorteilhafter Weise handelt es sich bei der federnden Schicht der vorliegenden Erfindung um ein Federblech, insbesondere ein solches aus Edelstahl. Es sind jedoch auch andere Materialien, insbesondere andere Metalle oder auch Kunststoffe denkbar. Ein Federblech bietet die optimalen Eigenschaften zur Ausführung der vorliegenden Erfindung und ist auch über einen langen Zeitraum ohne wesentliche Verschleißerscheinungen durch wiederholte Verformung einsetzbar.

Um insbesondere auf die Verriegelungselemente bzw. Eingriffselemente des Stands der Technik verzichten zu können, sind die Führungen der erfindungsgemäßen Abdeckung derart ausgestaltet, dass zumindest ein Teil eines Öffnungsweges und/oder eines Schließwegs des Trägerrollos am Ende des Öffnungswegs bzw. Schließwegs durch die aus der Federkraft der federnden Schicht resultierenden Schub- bzw. Zugkraft selbsttätig zurückgelegt wird. Mit anderen Worten wird durch die Führungsgestaltung die Federkraft der federnden Schicht derart in eine Schub- bzw. Zugkraft umgewandelt, dass diese Schub- bzw. Zugkraft ausreichend groß ist, um das Trägerrollo in einem Endbereich des Öffnungs- bzw. Schließwegs selbsttätig und automatisch zu bewegen, so dass das vollständige Öffnen bzw. Schließen des Trägerrollos erfolgt und das Trägerrollo in der vollständig geöffneten bzw. geschlossenen Position verriegelt wird. So kann durch die erfindungsgemäße Ausgestaltung und das Wirken der Schub-oder Zugkraft auf das Trägerrollo in einer Verschluss- bzw. Öffnungsrichtung auf das Vorsehen von Eingriffselementen bzw. Verriegelungselementen verzichtet werden, da die Kraftwirkung auf das Trägerrollo ausreicht, um dieses in der gewünschten Position zu halten bzw. festzulegen.

Darüber hinaus schlägt die vorliegende Erfindung ein Innenausstattungsteil für ein Fahrzeug mit einer Öffnung und einer Abdeckung zum Verschließen der Öffnung gemäß der obigen verschiedenen Ausführungsformen vor.

### 4. Kurze Beschreibung der Zeichnungen

Aus der folgenden Beschreibung einer beispielhaften Ausführungsform der vorliegenden Erfindung werden weitere Vorteile und Merkmale der Erfindung, insbesondere unter Bezugnahme auf die begleitenden Zeichnungen ersichtlich. In den begleitenden Zeichnungen kennzeichnen gleiche Bezugszeichen gleiche oder ähnliche Teile.

### In den Zeichnungen zeigt:

- Figur 1: eine perspektivische Ansicht eines Innenausstattungsteils mit einer Abdeckung gemäß einer beispielhaften Ausführungsform der vorliegenden Erfindung, wobei eine Schnittansicht im Bereich einer Führung des Trägerrollos, sowie ein Querschnitt der Abdeckung in Figur 1 angedeutet sind.
- Figur 2: eine Vergrößerung eines Abschnitts A im Bereich des Querschnitts der Abdeckung aus Figur 1.
- Figur 3: eine Vergrößerung eines Abschnitts B im Bereich des Querschnitts der Führung aus Figur 1.

### 5. Beschreibung einer beispielhaften Ausführungsform

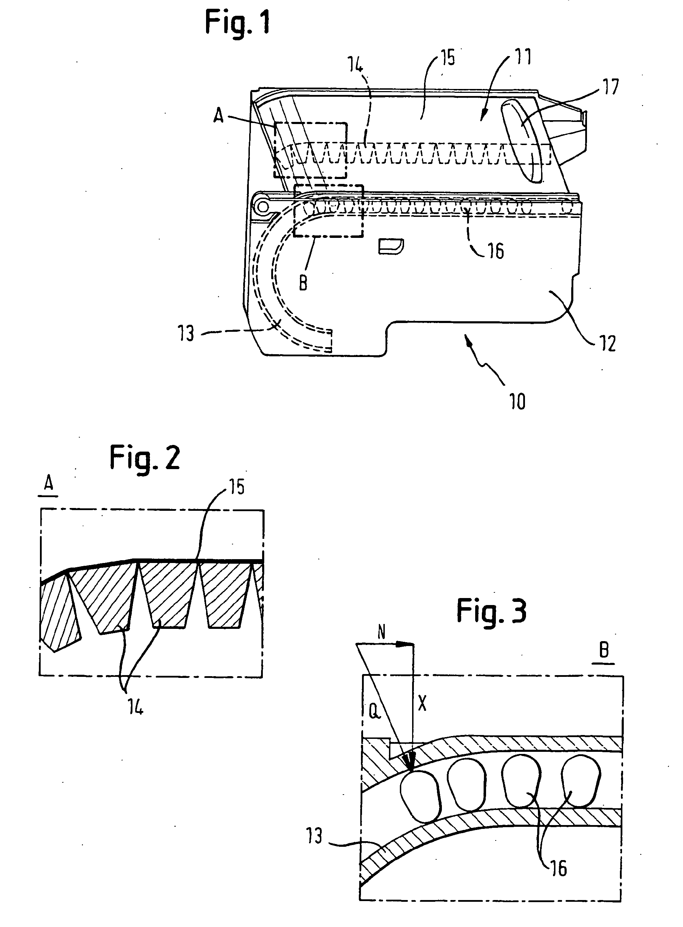

Unter Bezugnahme auf die Figuren 1 bis 3 wird im Folgenden eine beispielhafte Ausführungsform eines Innenausstattungsteils mit einer erfindungsgemäßen Abdeckung beschrieben. Figur 1 stellt in perspektivischer Ansicht ein Innenausstattungsteil 10 mit einer erfindungsgemäßen Abdeckung 11 dar. Das Innenausstattungsteil 10 weist ein Gehäuse 12 auf, welches eine von der Abdeckung 11 verschlossene im Wesentlichen rechteckige Öffnung definiert. Im Bereich von zwei Längskanten der Öffnung weist das Gehäuse 12 Führungen 13 auf. Der Verlauf einer Führung 13 ist in Figur 1 im Querschnitt angedeutet.

Die Abdeckung 11 umfasst in der dargestellten beispielhaften Ausführungsform ein Trägerrollo 14 und eine vollflächig auf dem Trägerrollo angebrachte (z. B. mit dem Trägerrollo verklebte) elastisch verformbare, federnde Schicht 15. Die federnde Schicht ist bei der beispielhaften Ausführungsform vorzugsweise ein Federblech und insbesondere ein solches aus Edelstahl. Der Verbund aus Trägerrollo 14 und federnder Schicht 15 ist entsprechend dimensioniert, dass er im geschlossenen Zustand der Abdeckung, wie in Figur 1 dargestellt ist, die Öffnung in dem Gehäuse 12 im Wesentlichen vollständig abdeckt. Um den Verbund aus Trägerrollo 14 und federnder Schicht 15 in einer Öffnungs- bzw. Schließrichtung der Abdeckung bewegen zu können, weist das Trägerrollo Führungselemente 16 auf. Die Führungselemente 16 sind auf beiden Längsseiten entsprechend den Längsseiten der Öffnung in dem Gehäuse 12 und der Führungen 13 des Trägerrollos 14 angeordnet und greifen in die Führungen 13 des Gehäuses 12 ein. Die Führungen 13 sind bei der dargestellten Ausführungsform als eine Art Führungsschienen ausgebildet. Um die Abdeckung leichter in einer Schließ- bzw. Öffnungsrichtung bewegen zu können, ist darüber hinaus eine Handhabe 17 vorgesehen.

Wie aus Figur 1 ersichtlich ist, verläuft die Führung 13 im Bereich der Öffnung im Wesentlichen gradlinig und in einem Bereich am Ende der Öffnung zum Verstauen der Abdeckung in dem Gehäuse 12 nicht gradlinig. In der dargestellten Ausführungsform weist die Führung 13 in diesem Bereich eine Krümmung auf. Diese Krümmung verursacht beim Öffnen der Abdeckung 11 eine Verformung des Trägerrollos 14 und der federnden Schicht 15. Das Trägerollo 14 besteht bei der dargestellten beispielhaften Ausführungsform aus einer Lamellenstruktur, so dass der Trägerschicht 14 ermöglich wird, beim Öffnen der Abdeckung 11 die durch die Führungen 13 vorgegebene Bewegung (Krümmung) und die damit verbundene Verformung widerstandslos "mitzumachen". Darüber hinaus ist die federnde Schicht 15 elastisch verformbar ausgestaltet, so dass auch die federnde Schicht der durch die Führungen 13 vorgegebenen Verformung der Abdeckung 11 folgen kann.

Durch die Verformung der federnden Schicht 15 mittels der Führungen 13 und durch die Federwirkung der federnden Schicht 15 übt die federnde Schicht 15 bei der Verformung eine Federkraft aus. Da die federnde Schicht 15 fest mit dem Trägerrollo 14 verbunden ist, wird diese Federkraft auf das Trägerrollo 14 übertragen. Mit anderen Worten neigt die verformte Abdeckung 11 dazu, ihre im geschlossenen Zustand vorliegende, ursprüngliche Form wieder anzunehmen, die in der dargestellten beispielhaften Ausführungsform eine planare ebene Form ist.

Wie es in der beispielhaften Ausführungsform dargestellt ist, ist selbst im geschlossenen Zustand der Abdeckung 11, wie sie in Figur 1 dargestellt ist, ein Endbereich der Abdeckung in dem Bereich der Führungen, in dem die Krümmung der Führungen 13 beginnt, verformt. Anhand dieses verformten Bereichs, der auch in den vergrößerten Querschnittsansichten in Figuren 2 und 3 dargestellt ist, wird im Folgenden die Kraftverteilung erläutert.

Wie es aus den Figuren 2 und 3 ersichtlich ist, ist im vollständig geschlossenen Zustand der Abdeckung 11 ein Endbereich im Bereich, in dem die Führungen bereits gekrümmt sind, verformt. In diesem Bereich sind sowohl die federnde Schicht 15 als auch das Trägerrollo 14 verformt und die federnde Schicht 15 erzeugt eine Querkraft Q, die auch auf das Trägerrollo 14 übertragen wird. Mit anderen Worten ist der Verbund aus Trägerrollo 14 und federnder Schicht 15 in diesem verformten Zustand bestrebt, in seine ursprüngliche Form zurückzukehren. Durch die Ausgestaltung der Kulissenführung kann diese Querkraft Q teilweise in eine Schub- bzw. Zugkraft N (in der Darstellung in Figur 3 eine Schubkraft in Richtung der Schließrichtung der Abdeckung) umgewandelt werden. Der restliche Teil der Federkraft bleibt ungenutzt, hat jedoch keinerlei negativen Einfluss auf die Betätigbarkeit der Abdeckung 11. Mit anderen Worten sind die Führungen 13 derart gestaltet, dass der Kraftvektor der Querkraft Q (die Rückstellkraft wirkt gegen die Führungen 13) in zwei Vektoren N und X zerlegt wird, wobei die Kraft N die Schub- bzw. Zugkraft darstellt und die Kraft X ungenutzt bleibt. Die Kraft X dient dennoch dazu, diese Abdeckung 11 in den Führungen zu halten, um ein "Klappern" im Betrieb zu vermeiden.

Folglich wird in der dargestellten beispielhaften Ausführungsform im vollständig geschlossenen Zustand der Abdeckung 11 durch die Verformung mittels der Ausgestaltung der Führungen 13 in dem Endbereich der Öffnung die Abdeckung 11 verformt. Durch diese Verformung wird die von der federnden Schicht 15 ausgeübte Querkraft Q in eine Schubkraft N umgewandelt, die auf das Trägerrolle 14 wirkt und die Abdeckung 11 in eine Schließrichtung drückt, so dass die Abdeckung 11 in ihrer geschlossenen Position verbleibt. Folglich sind keine weiteren Verriegelungselemente notwendig, um die Abdeckung 11 in dieser geschlossenen Position zu halten. Wird darüber hinaus die Abdeckung 11 über die Handhabe 17 einen geringfügigen Betrag (Teil des Schließwegs am Ende des Schließwegs) nach oben geschoben oder aus der geöffneten Position in die geschlossene Position gezogen, bis sie in diesen Bereich (Teil des Schließwegs am Ende des Schließwegs) eindringt, erfolgt der Schließvorgang für den restlichen Teilbereich selbsttätig bzw. automatisch.

Gleichermaßen können die Führungen 13 so ausgestaltet sein, dass eine gleiche Wirkung der federnden Schicht auf das Trägerrollo 14 in einer nahezu vollständig geöffneten Position bzw. vollständig geöffneten Position (Teil des Öffnungswegs am Ende des Öffnungswegs) der Abdeckung 11 erfolgt. Genauer gesagt würde die Federkraft Q der federnden Schicht 15 dann in eine Zugkraft N umgewandelt, um das Trägerrollo 14 und somit die Abdeckung 11 in Richtung einer geöffneten Position zu beaufschlagen, um die Abdeckung in einer vollständig geöffneten Position zu halten und einen Teil des Öffnungswegs am Ende des Öffnungswegs selbsttätig zurückzulegen.

Wie aus der obigen Beschreibung ersichtlich wird, dient das Anbringen bzw. Einbringen einer federnden Schicht an einem bzw. in ein Trägerrollo 14 dazu, durch die Ausgestaltung der Kulissenführung 13 die Abdeckung 11 mit einer Schub- bzw. Zugkraft zu beaufschlagen, um einerseits die Schließ- bzw.

Öffnungsbewegung der Abdeckung 11 zu unterstützen oder selbsttätig auszuführen, andererseits auch in einem Endbereich des Öffnungs- bzw. Schließwegs der Abdeckung 11 eine selbsttätige bzw. automatische Schließbewegung zu bewirken. Darüber hinaus ermöglicht dies, in der vollständig geöffneten Position bzw. vollständig geschlossenen Position der Abdeckung 11 auf Verriegelungselemente, wie sie im Stand der Technik notwendig sind, zu verzichten.

Die vorstehende rein beispielhafte Erläuterung der vorliegenden Erfindung anhand einer Ausführungsform ist nicht als begrenzend anzusehen. Vielmehr wird der Umfang der vorliegenden Erfindung durch die begleitenden Patentansprüche definiert.

## Patentansprüche

1. Innenausstattungsteil (10) für ein Fahrzeug mit einer Öffnung umfassend:
Führungen (13) an gegenüberliegenden Seiten der Öffnung, wobei die Führungen im Bereich der Öffnung geradlinig verlaufen und an einem Ende der Öffnung eine Krümmung aufweisen; und
eine Abdeckung (11) zum Verschließen der Öffnung mit einem Trägerrollo (14), das in den Führungen (13) geführt ist, und einer elastisch verformbaren, federnden Schicht (15), die in wenigstens einem Teilbereich des Trägerrollos (14) mit dem Trägerrollo verbunden vorgesehen ist,
**dadurch gekennzeichnet, dass**
die Abdeckung (11) eine ebene, flache Ursprungsform aufweist, so dass bei einer Verformung des Trägerrollos (14) durch die Krümmung der Führungen wenigstens in dem Teilbereich der federnden Schicht (15) beim Schließen oder Öffnen des Trägerrollos, die Federkraft (Q) der verformten, federnden Schicht durch die Krümmung der Führungen in zwei Kraftvektoren zerlegt wird, von denen einer eine Schubkraft (N) in einer Verschlussrichtung oder eine Zugkraft in einer Öffnungsrichtung des Trägerrollos auf das Trägerrollo ausübt.

2. Innenausstattungsteil nach Anspruch 1, bei der die federnde Schicht (15) im Wesentlichen in dem gesamten Bereich des Trägerrollos (14) vorgesehen ist und vollflächig damit verbunden ist.

3. Innenausstattungsteil nach Anspruch 1 oder 2, bei der die federnde Schicht (15) als Dekorfläche ausgestaltet ist.

4. Innenausstattungsteil nach Anspruch 3, bei der die federnde Schicht (15) eine geschlossene Dekorfläche bildet.

5. Innenausstattungsteil nach Anspruch 1, bei der die federnde Schicht (15) in das Trägerrollo (14) integriert ist.

6. Innenausstattungsteil nach einem der vorstehenden Ansprüche, bei der die federnde Schicht (15) ein Federblech, insbesondere ein solches aus Edelstahl ist.

7. Innenausstattungsteil nach einem der vorstehenden Ansprüche, bei der das Trägerrollo (14) und die federnde Schicht (15) im vollständig geschlossenen Zustand durch die Krümmung der Führungen (13) verformt sind, so dass ein Teil eines Schließwegs des Trägerrollos (14) am Ende des Schließwegs durch die aus der Federkraft der federnden Schicht (15) und der Krümmung der Führungen (13) resultierenden Schubkraft selbsttätig zurückgelegt wird.

8. Innenausstattungsteil nach einem der vorstehenden Ansprüche, bei der der andere Kraftvektor (X) das Trägerrollo in den Führungen hält.

## Claims

1. Interior fitting portion (10) for a vehicle having an opening comprising:
guides (13) on opposite sides of the opening, the guides running rectilinearly in the region of the opening and having a curvature at one end of the opening; and
a cover (11) for closing the opening with a carrier blind (14) which is guided in the guides (13), and an elastically deformable, resilient layer (15) which is provided in at least one partial region of the blind (14), bonded to the blind,
**characterised in that**
the cover (11) has a planar, flat original shape so that, on deformation of the blind (14) due to the curvature of the guides, at least in the partial region of the resilient layer (15) when the blind is opened or closed the resilience (Q) of the deformed resilient layer is split by the curvature of the guides into two force vectors, one of which exerts a pushing force (N) on the blind in a direction of closing the blind or a pulling force in a direction of opening.

2. Interior fitting portion according to claim 1, in which the resilient layer (15) is provided substantially in the whole region of the blind (14) and is bonded thereto over the whole surface.

3. Interior fitting portion according to claim 1 or 2, in which the resilient layer (15) is designed as a decorative surface.

4. Interior fitting portion according to claim 3, in which the resilient layer (15) forms a closed decorative surface.

5. Interior fitting portion according to claim 1, in which the resilient layer (15) is integrated in the blind (14).

6. Interior fitting portion according to any of the preceding claims, in which the resilient layer (15) is a spring steel sheet, in particular one made of special steel.

7. Interior fitting portion according to any of the preceding claims, in which the blind (14) and the resilient layer (15) in the fully closed state are deformed by the curvature of the guides (13), so that part of a path of closing of the blind (14) at the end of the path of closing is automatically covered due to the pushing force resulting from the resilience of the resilient layer (15) and the curvature of the guides (13).

8. Interior fitting portion according to any of the preceding claims, in which the other force vector (X) keeps the blind in the guides.

## Revendications

1. Partie d'équipement intérieur (10), pour un véhicule avec une ouverture, comprenant :
des guidages (13) sur des côtés opposés de l'ouverture, les guidages s'étendant en ligne droite dans la zone de l'ouverture et présentant une courbure à une extrémité de l'ouverture ; et
une couverture (11), pour fermer l'ouverture, avec un store de support (14), guidé dans les guidages (13), et une couche (15) élastique, déformable élastiquement, reliée au store de support (14) en au moins une zone partielle du store de support,
**caractérisée en ce que**
la couverture (11) présente une forme initiale plate, plane, de manière que, dans le cas d'une déformation du store de support (14), du fait de la courbure des guidages, au moins dans la zone partielle de la couche (15) élastique, lors de la fermeture ou de l'ouverture du store de support, la force élastique (Q) de la couche élastique déformée est décomposée, par la courbure des guidages, en deux vecteurs force, dont l'un exerce sur le store de support une force de poussée (N) dans une direction de fermeture, ou une force de traction dans une direction d'ouverture du store de support.

2. Partie d'équipement intérieur selon la revendication 1, pour laquelle la couche (15) élastique est prévue essentiellement dans l'ensemble de la zone du store de support (14) et est reliée sur toute la surface.

3. Partie d'équipement intérieur selon la revendication 1 ou 2, pour laquelle la couche (15) élastique est réalisée sous forme de surface de décoration.

4. Partie d'équipement intérieur selon la revendication 3, pour laquelle la couche (15) élastique forme une surface de décoration fermée.

5. Partie d'équipement intérieur selon la revendication 1, pour laquelle la couche (15) élastique est intégrée dans le store de support (14).

6. Partie d'équipement intérieur selon l'une des revendications précédentes, pour laquelle la couche (15) élastique est une tôle à ressort, en particulier une tôle à ressort en acier spécial.

7. Partie d'équipement intérieur selon l'une des revendications précédentes, pour laquelle le store de support (14) et la couche (15) élastique, à l'état complètement fermé, sont déformés par la courbure des guidages (13), de manière qu'une partie d'une course de fermeture du store de support (14), à la fin de la course de fermeture, soit parcourue automatiquement, du fait de la force de poussée résultant de la force élastique de la couche (15) élastique et de la courbure des guidages (13).

8. Partie d'équipement intérieur selon l'une des revendications précédentes, pour laquelle l'autre vecteur force (X) maintient le store de support dans les guidages.
